# EUROPEAN PATENT APPLICATION

(11) **EP 4 527 800 A1**
(43) Date of publication of application: **26.03.2025**
(21) Application number: 23820056.2
(22) Date of filing: 02.06.2023
(51) Int. Cl.: C01D 15/08, C01D 15/02, C22B 3/22, C22B 7/00

(54) **METHOD FOR PRODUCING HIGH-PURITY LITHIUM CARBONATE FROM WASTE SAGGERS**

(30) Priority: 09.06.2022 KR 20220070190
(71) Applicant: Koreaseparation Co., Ltd., Donghae-si Gangwon-do 25799 (KR)
(72) Inventor: SONG, Won Hong, Seoul 04780 (KR)
(74) Representative: BCKIP Part mbB
(86) International application number: PCT/KR2023/007607
(87) International publication number: WO 2023/239120

(57) **Abstract**

The present invention provides an optimized method for recovering high-purity lithium carbonate from a lithium-containing composite oxide such as lithium silicate, lithium aluminum oxide, or lithium aluminum silicate deposited on an erosion surface of a discarded waste sagger. Therefore, when the method for producing high-purity lithium carbonate from a waste sagger of the present invention is used, it is expected not only to be able to produce high-purity lithium carbonate that can be used for manufacturing lithium secondary batteries by recycling a discarded waste sagger, but also to be able to recycle a positive electrode active material, iron oxide, alumina, silicate, calcium carbonate, and the like obtained as by-products during the production process of the lithium carbonate.

## Description

### TECHNICAL FIELD

The present invention relates to a method for producing high-purity lithium carbonate from a waste sagger.

### BACKGROUND ART

A positive electrode active material of a lithium secondary battery is prepared by being fired at a high temperature in a sagger made of ceramic oxide containing SiO₂, Al₂O₃, and MgO as main components. Since the sagger is used for repeated high-temperature firing of a lithium-containing composite oxide, which is a raw material of the positive electrode active material, the surface of the sagger is eroded over time, and a lithium compound such as lithium hydroxide or lithium carbonate, and the positive electrode active material are deposited on the eroded portion. The sagger with the surface eroded by the lithium hydroxide, the lithium carbonate, or the like is ultimately discarded due to the deterioration in thermal durability. The amount of waste saggers generated domestically is known to be about 9,000 tons per year, but as the demand for lithium secondary batteries rapidly increases due to the popularization of mobile devices and electric vehicles, the amount of waste saggers generated is expected to increase rapidly. A positive electrode active material used in lithium secondary batteries uses lithium carbonate and lithium hydroxide as lithium sources, which are generally produced from nature, such as ore or brine, or through a method of recovering discarded waste secondary batteries.

As described above, a sagger is used in the preparation of a positive electrode active material and eroded by a lithium-containing composite oxide during a high-temperature firing process, and thus, loses its function. Therefore, if lithium can be recovered and purified from lithium-containing materials deposited in an eroded portion from a waste sagger discarded due to the deterioration in thermal durability caused by repeated high-temperature firing of the lithium-containing composite oxide, it is expected that this will contribute to the effective use of lithium resources. However, there is no known method for recovering a high-purity lithium carbonate from a waste sagger.

The patent literature and references cited herein are incorporated by reference herein to the same extent that each document is individually and clearly identified by reference.

The patent literature and references cited herein are incorporated by reference herein to the same extent that each document is individually and clearly identified by reference.

### DISCLOSURE OF THE INVENTION

### TECHNICAL PROBLEM

An object of the present invention is to provide a method for recovering high-purity lithium carbonate from a waste sagger discarded after being used for high-temperature firing when preparing a positive electrode active material for a lithium secondary battery.

Other objects and technical features of the present invention are presented in more detail by a detailed description of the invention, claims, and drawings below.

### TECHNICAL SOLUTION

The present invention provides a method for producing high-purity lithium carbonate from a waste sagger, wherein the method includes a first step of crushing a waste sagger to produce a waste sagger crushed material, a second step of adding an alkali leaching agent and water to the waste sagger crushed material and then allowing a reaction to occur therebetween to prepare a waste sagger crushed material dissolution reaction slurry, a third step of performing primary solid-liquid separation on the waste sagger crushed material dissolution reaction slurry, a fourth step of evaporating and concentrating a filtrate obtained in a liquid phase through the primary solid-liquid separation, a fifth step of performing secondary solid-liquid separation on a contraction liquid obtained through the evaporation and concentration,
a sixth step of performing a carbonation reaction on a filtrate obtained in a liquid phase through the secondary solid-liquid separation to prepare a carbonation reaction liquid, a seventh step of performing tertiary solid-liquid separation on the carbonation reaction liquid, an eighth step of adding water to a first lithium carbonate obtained in a solid phase through the tertiary solid-liquid separation to prepare a first lithium carbonate suspension, and then injecting carbon dioxide (CO₂) thereto to dissolve the first lithium carbonate, a ninth step of performing quaternary solid-liquid separation on an aqueous solution in which the first lithium carbonate is dissolved, a tenth step of heating, thereby recrystallizing, a filtrate obtained in a liquid phase through the quaternary solid-liquid separation to precipitate a second lithium carbonate, and an eleventh step of performing quinary solid-liquid separation on the filtrate from which the second lithium carbonate has been precipitated to obtain high-purity second lithium carbonate in a solid phase, and drying the second lithium carbonate.

In addition, the present invention provides a method for producing high-purity lithium carbonate from a waste sagger, wherein the method includes a twelfth step of crushing a waste sagger to produce a waste sagger crushed material, a thirteenth step of adding an alkali leaching agent and water to the waste sagger crushed material and then allowing a reaction to occur therebetween to prepare a waste sagger crushed material dissolution reaction slurry, a fourteenth step of performing primary solid-liquid separation on the waste sagger crushed material dissolution reaction slurry, a fifteenth step of preparing a solid phase obtained through the primary solid-liquid separation as a suspension, and then performing primary wet magnetic separation to obtain a first magnetic complex and a first non-magnetic complex, a sixteenth step of preparing the first non-magnetic complex as a suspension, and then performing secondary wet magnetic separation to obtain a second magnetic complex and a second non-magnetic complex, a seventeenth step of introducing water and a leaching agent to the second non-magnetic complex, and then allowing a reaction to occur therebetween to prepare a lithium leaching reaction liquid, an eighteenth step of performing senary solid-liquid separation on the lithium leaching reaction liquid, a nineteenth step of evaporating and concentrating a filtrate obtained in a liquid phase through the senary solid-liquid separation, a twentieth step of performing secondary solid-liquid separation on a concentration liquid obtained through the evaporation and concentration, a twenty-first step of performing a carbonation reaction on a filtrate obtained in a liquid phase through the secondary solid-liquid separation to prepare a carbonation reaction liquid, a twenty-second step of performing tertiary solid-liquid separation on the carbonation reaction liquid, a twenty-third step of adding water to a first lithium carbonate obtained in a solid phase through the tertiary solid-liquid separation to prepare a first lithium carbonate suspension, and then injecting a carbon dioxide (CO₂) gas thereto to dissolve the first lithium carbonate, a twenty-fourth step of performing quaternary solid-liquid separation on an aqueous solution in which the first lithium carbonate is dissolved, a twenty-fifth step of heating, thereby recrystallizing, a filtrate obtained in a liquid phase through the quaternary solid-liquid separation to precipitate a second lithium carbonate, and
a twenty-sixth step of performing quinary solid-liquid separation on the filtrate from which the second lithium carbonate has been precipitated to obtain high-purity second lithium carbonate in a solid phase, and drying the second lithium carbonate.

The waste sagger crushed material dissolution reaction slurry is prepared by adding one or more alkalis among a hydroxide of an alkali metal, a carbonate of an alkali metal, or a hydroxide of an alkali earth metal together with water to the waste sagger crushed material, and heating the mixture.

The first magnetic complex is a magnetic complex containing iron oxide and iron scale, the second magnetic complex is a magnetic complex containing a positive electrode active material, and the solid phase of the senary solid-liquid separation contains alumina and silicate, and the lithium leaching reaction liquid is prepared by adding a hydroxide or oxide of an alkali earth metal, as a leaching agent, and water to the second non-magnetic complex and then allowing a reaction to occur therebetween in a pressure reaction vessel at a temperature of 100 °C to 200 °C within 3 hours of reaction time, and the lithium leaching reaction liquid has a reaction slurry concentration of 10 wt% to 50 wt%.

The evaporation and concentration is performed by performing evaporation under reduced pressure at 70 °C to 95 °C or performing heating to 100 °C in an atmosphere in which carbon dioxide and a concentration liquid do not come into contact by purging a nitrogen gas or an argon gas under atmospheric pressure, and the evaporation and concentration is performed until the concentration of lithium in the concentration liquid reaches 0.5% to 5%.

The carbonation reaction is performed by injecting one or two or more selected from among carbon dioxide, carbonated water, and a lithium hydrogen carbonate aqueous solution to a filtrate obtained in a liquid phase through the secondary solid-liquid separation to allow a reaction to occur therebetween until the pH reaches 8 to 10, and a filtrate obtained in a liquid phase through the tertiary solid-liquid separation is added to the waste sagger crushed material dissolution reaction slurry to further recover unreacted lithium hydroxide which has not participated in the carbonization reaction.

A reaction of dissolving the first lithium carbonate by injecting carbon dioxide to the first lithium carbonate suspension is performed at a temperature of 0 °C to 20 °C, and allows the pH of a reaction liquid to be 6 to 8 at the end of the reaction, and a filtrate obtained in a liquid phase through the quaternary solid-liquid separation is heated to a temperature of 80 °C to 100 °C.

The lithium carbonate (second lithium carbonate) produced by the production method of the present invention has a purity of 99.9% or greater.

### ADVANTAGEOUS EFFECTS

The present invention provides an optimized method for recovering high-purity lithium carbonate from lithium-containing compounds such as lithium hydroxide, lithium carbonate, lithium silicate, lithium aluminum oxide, and lithium aluminum silicide which are deposited on an erosion surface of a waste sagger discarded after being used. Therefore, when the method for producing high-purity lithium carbonate from a waste sagger of the present invention is used, it is expected not only to be able to produce high-purity lithium carbonate that can be used for manufacturing lithium secondary batteries by recycling a discarded waste sagger, but also to be able to recycle a positive electrode active material, iron oxide, alumina, silicate, calcium carbonate, and the like obtained as by-products during the production process of the lithium carbonate.

### BRIEF DESCRIPTION OF THE DRAWINGS

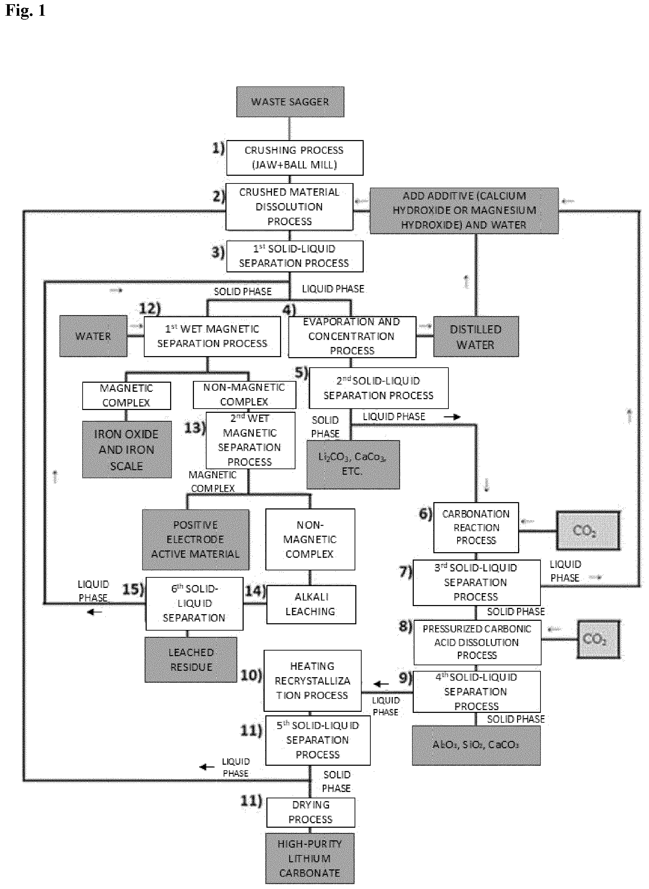

FIG. 1 schematically shows a method for producing high-purity lithium carbonate from a waste sagger of the present invention.

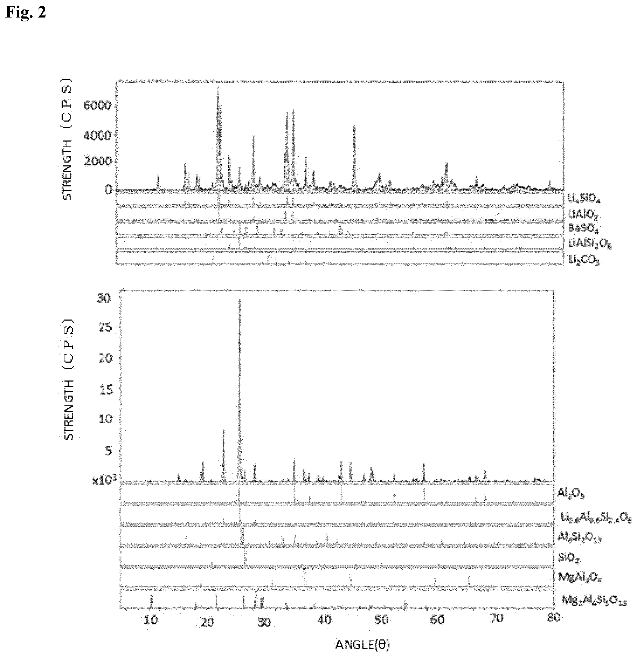

FIG. 2 shows results of XRD analysis of constituent minerals of a waste sagger of the present invention.

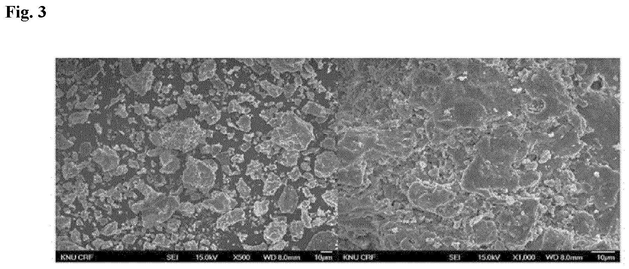

FIG. 3 is a photograph showing the overall particle size distribution and structure of the surface of an independent particle by using a scanning electron microscope (SEM) photograph of a waste sagger crushed material.

### BEST MODE FOR CARRYING OUT THE INVENTION

The present invention relates to a method for recovering high-purity lithium carbonate from a sagger (waste sagger) discarded after being used for firing a positive electrode active material for a secondary battery. Due to the repeated use of the sagger, the sagger is eroded by lithium hydroxide or lithium carbonate, thereby being destructed, and thus, is discarded without being recycled. An object of the present invention is to recover a high value-added lithium compound from a waste sagger which is discarded without being recycled. The waste sagger is a ceramic container used in firing a positive electrode active material for a secondary battery, and contains SiO₂, Al₂O₃, and MgO as main components.

Table 1 shows the composition of a waste sagger used in sintering NCA (sample name: SG1) and NCM (sample name: SG2), which are positive electrode materials.

**[Table 1]**

| Composition | SG1 (NCA) | SG2 (NCM) |
|---|---|---|
| Li₂O (as Li) | 4.52 (2.1)% | 1.89 (0.88)% |
| NiO | 0.13% | 0.16% |
| Co₃O₄ | 0.01% | 0.02% |
| SiO₂ | 49.38% | 30.73% |
| Al₂O₃ | 38.25% | 51.38% |
| CaO | 0.48% | 0.52% |
| MgO | 5.37% | 13.63% |
| Fe₂O₃ | 0.33% | 0.54% |
| Na₂O | 0.32% | 0.12% |
| K₂O | 0.30% | 0.19% |
| etc. | 0.91% | 0.82% |

As a result of the analysis, SG1 and SG2 are confirmed to have a high lithium (Li) content of 2.1% and 0.88%, respectively, and when the lithium content is converted into a lithium carbonate content, the lithium carbonate content corresponds to SG1 = 11.17% and SG2 = 4.68%. In addition, the contents of nickel and cobalt are confirmed to be 0.13% to 0.16% and 0.01% to 0.02%, respectively, which is confirmed to be sufficient for recovery.

The waste sagger is composed of mullite, cordierite, alumina, quartz, spinel, lithium silicate, lithium aluminum oxide, lithium aluminum silicate, and the like. Among the constituent components of the waste sagger, materials that cause the destruction of the waster sagger are lithium silicate, lithium aluminum oxide, lithium aluminum silicate, and the like.

The present invention provides a method for producing high-purity lithium carbonate from a waste sagger, wherein the method includes a first step of crushing a waste sagger to produce a waste sagger crushed material, a second step of adding an alkali leaching agent and water to the waste sagger crushed material and then allowing a reaction to occur therebetween to prepare a waste sagger crushed material dissolution reaction slurry, a third step of performing primary solid-liquid separation on the waste sagger crushed material dissolution reaction slurry, a fourth step of evaporating and concentrating a filtrate obtained in a liquid phase through the primary solid-liquid separation, a fifth step of performing secondary solid-liquid separation on a contraction liquid obtained through the evaporation and concentration,
a sixth step of performing a carbonation reaction on a filtrate obtained in a liquid phase through the secondary solid-liquid separation to prepare a carbonation reaction liquid, a seventh step of performing tertiary solid-liquid separation on the carbonation reaction liquid, an eighth step of adding water to a first lithium carbonate obtained in a solid phase through the tertiary solid-liquid separation to prepare a first lithium carbonate suspension, and then injecting carbon dioxide (CO₂) thereto to dissolve the first lithium carbonate, a ninth step of performing quaternary solid-liquid separation on an aqueous solution in which the first lithium carbonate is dissolved, a tenth step of heating, thereby recrystallizing, a filtrate obtained in a liquid phase through the quaternary solid-liquid separation to precipitate a second lithium carbonate, and an eleventh step of performing quinary solid-liquid separation on the filtrate from which the second lithium carbonate has been precipitated to obtain high-purity second lithium carbonate in a solid phase, and drying the second lithium carbonate.

In addition, the present invention provides a method for producing high-purity lithium carbonate from a waste sagger, wherein the method includes a twelfth step of crushing a waste sagger to produce a waste sagger crushed material, a thirteenth step of adding an alkali leaching agent and water to the waste sagger crushed material and then allowing a reaction to occur therebetween to pepare a waste sagger crushed material dissolution reaction slurry, a fourteenth step of performing primary solid-liquid separation on the waste sagger crushed material dissolution reaction slurry, a fifteenth step of preparing a solid phase obtained through the primary solid-liquid separation as a suspension, and then performing primary wet magnetic separation to obtain a first magnetic complex and a first non-magnetic complex, a sixteenth step of preparing the first non-magnetic complex as a suspension, and then performing secondary wet magnetic separation to obtain a second magnetic complex and a second non-magnetic complex, a seventeenth step of introducing water and a leaching agent to the second non-magnetic complex, and then allowing a reaction to occur therebetween to prepare a lithium leaching reaction liquid, an eighteenth step of performing senary solid-liquid separation on the lithium leaching reaction liquid, a nineteenth step of evaporating and concentrating a filtrate obtained in a liquid phase through the senary solid-liquid separation, a twentieth step of performing secondary solid-liquid separation on a concentration liquid obtained through the evaporation and concentration, a twenty-first step of performing a carbonation reaction on a filtrate obtained in a liquid phase through the secondary solid-liquid separation to prepare a carbonation reaction liquid, a twenty-second step of performing tertiary solid-liquid separation on the carbonation reaction liquid, a twenty-third step of adding water to a first lithium carbonate obtained in a solid phase through the tertiary solid-liquid separation to prepare a first lithium carbonate suspension, and then injecting a carbon dioxide (CO₂) gas thereto to dissolve the first lithium carbonate, a twenty-fourth step of performing quaternary solid-liquid separation on an aqueous solution in which the first lithium carbonate is dissolved, a twenty-fifth step of heating, thereby recrystallizing, a filtrate obtained in a liquid phase through the quaternary solid-liquid separation to precipitate a second lithium carbonate, and
a twenty-sixth step of performing quinary solid-liquid separation on the filtrate from which the second lithium carbonate has been precipitated to obtain high-purity second lithium carbonate in a solid phase, and drying the second lithium carbonate.

The waste sagger crushed material dissolution reaction slurry is prepared by adding one or more alkalis among a hydroxide of an alkali metal, a carbonate of an alkali metal, or a hydroxide of an alkali earth metal together with water to the waste sagger crushed material, and heating the mixture.

The first magnetic complex is a magnetic complex containing iron oxide and iron scale, the second magnetic complex is a magnetic complex containing a positive electrode active material, and the solid phase of the senary solid-liquid separation contains alumina and silicate, and the lithium leaching reaction liquid is prepared by adding a hydroxide or oxide of an alkali earth metal, as a leaching agent, and water to the second non-magnetic complex and then allowing a reaction to occur therebetween in a pressure reaction vessel at a temperature of 100 °C to 200 °C within 3 hours of reaction time, and the lithium leaching reaction liquid has a reaction slurry concentration of 10 wt% to 50 wt%.

The evaporation and concentration is performed by performing evaporation under reduced pressure at 70 °C to 95 °C or performing heating to 100 °C in an atmosphere in which carbon dioxide and a concentration liquid do not come into contact by purging a nitrogen gas or an argon gas under atmospheric pressure, and the evaporation and concentration is performed until the concentration of lithium in the concentration liquid reaches 0.5% to 5%.

The carbonation reaction is performed by injecting one or two or more selected from among carbon dioxide, carbonated water, and a lithium hydrogen carbonate aqueous solution to a filtrate obtained in a liquid phase through the secondary solid-liquid separation to allow a reaction to occur therebetween until the pH reaches 8 to 10, and a filtrate obtained in a liquid phase through the tertiary solid-liquid separation is added to the waste sagger crushed material dissolution reaction slurry to further recover unreacted lithium hydroxide which has not participated in the carbonization reaction.

A reaction of dissolving the first lithium carbonate by injecting carbon dioxide to the first lithium carbonate suspension is performed at a temperature of 0 °C to 20 °C, and allows the pH of a reaction liquid to be 6 to 8 at the end of the reaction, and a filtrate obtained in a liquid phase through the quaternary solid-liquid separation is heated to a temperature of 80 °C to 100 °C.

The lithium carbonate (second lithium carbonate) produced by the production method of the present invention has a purity of 99.9% or greater.

### MODE FOR CARRYING OUT THE INVENTION

Hereinafter, the steps of the production method will be described in detail according to processes.

### 1) First process: Waste sagger crushing process

A waste sagger is crushed into powder of 200# or less. There is a problem in that the crushing efficiency is too low to pulverize the waste sagger at once. Therefore, it is preferable that the waste sagger is coarsely crushed to 1 mm or less through primary crushing, and then crushed to 200# (mesh) or less through secondary crushing. The waste sagger has a high compressive strength and is vulnerable to impact. An impact-type crusher may be applied to the crushing of the waste sagger, but crushed particles having sharp surfaces with high hardness are generated, resulting in increasing the wear of parts of the crusher, thereby increasing the costs.

Therefore, in the present invention, a jaw crusher with easy replacement of parts and low cost is used in the primary crushing process, and a ball mill is used in the secondary crushing process. Preferably, in order to improve the crushing efficiency, a medium crusher such as an impact crusher may be arranged before the secondary crushing process.

### 2) Second process: Waste sagger crushed material dissolution process

The waste sagger crushed material crushed through the first process includes a lithium-containing material such as lithium hydroxide, lithium carbonate, lithium silicate, lithium aluminum oxide, or lithium aluminum silicate. Most of the lithium-containing materials are water-soluble, but lithium aluminum silicate and the like have low solubility with respect to water, and thus, have a problem of being difficult to be dissolved only with water. In order to solve the above-described problem, in the present invention, a method is used in which the waste sagger crushed material is mixed with an alkali including one or a mixture of two or more selected from the group consisting of a hydroxide of an alkali metal, a carbonate of an alkali metal, or a hydroxide of an alkali earth metal, and water, and then the mixture is heated. Since the waste sagger crushed material is dissolved using a method of heating the alkali leaching agent theretogether, lithium aluminum silicate or the like having low solubility with respect to water may also be decomposed, so that the crushed material dissolution process of the present invention has an advantage of increasing the recovery rate of lithium. A decomposition reaction of the lithium-containing material having low solubility tend to increase in reactivity in proportion to the concentration of an alkali and the temperature. However, if an alkali aqueous solution prepared with an alkali metal salt is used as a leaching agent, the concentration of silicon and aluminum increases, so that there is a disadvantage in that a separate process to remove the same is required. In contrast, if a leaching agent made of an oxide or hydroxide of an alkali earth metal is used, soluble silicon or aluminum and a poorly soluble salt are formed, which promote the decomposition of lithium aluminum silicate and at the same time, help to maintain the concentration of the silicon and the aluminum in a solution low, and which react with lithium carbonate having relatively low solubility to produce lithium hydroxide with high solubility and poorly soluble carbonate, so that there is a characteristic of helping to improve the leaching rate of lithium. Therefore, in the waste sagger crushed material dissolution process of the present invention, it is preferable to use calcium hydroxide, calcium oxide, or magnesium hydroxide as an additive to promote the extraction of lithium, and the amount thereof added is suitably 5 parts by weight to 50 parts by weight based on 100 weight parts of the sagger. The waste sagger crushed material dissolution process requires 6 hours or more to complete the reaction at a temperature of 20 °C or lower, and the particle size of a product is also very fine, thereby causing difficulty in solid-liquid separation. In addition, the reaction is completed within 2 hours at 50 °C, and the reaction is completed within 30 minutes at 80 °C. In addition, the reaction is completed within 10 minutes around 100 °C, but there is a problem in that the loss of energy due to the evaporation of water is significant. Therefore, the reaction temperature of the waste sagger crushed material dissolution process of the present invention is preferably 50 °C to 80 °C, and the reaction time thereof is preferably 30 minutes to 120 minutes.

In summary, the preferred waste sagger crushed material dissolution process of the present invention is to heat the waste sagger crushed material dissolution reaction liquid containing calcium hydroxide, calcium oxide, or magnesium hydroxide, which is a reaction accelerator, in an amount of 5 parts by weight to 50 parts by weight based on 100 parts by weight of the waste sagger crushed material crushed to 200# (mesh) or less to a temperature of 50 °C to 80 °C to be reacted for 30 minutes to 120 minutes. In addition, if a hydroxide (or oxide) of an alkali earth metal and a hydroxide of an alkali metal corresponding to 5 % to 50% of the amount of the hydroxide (or oxide) of an alkali earth metal used are further introduced under the same conditions, there is an effect of increasing the leaching speed and leaching rate of lithium by about 5%. This may become a preferred method if an increase in process cost can be tolerated.

### 3) Third process: Primary solid-liquid separation process

A suspension in which the waste sagger crushed material is dissolved is subjected to solid-liquid separation (primary solid-liquid separation). The primary solid-liquid separation may be performed using a sedimentation tank, a filter press, a screw filter, a centrifuge, or the like, or a combination of two or more thereof to increase the efficiency. A solid phase obtained by the primary solid-liquid separation includes a positive electrode active material and a refractory material composition, and a liquid phase (filtrate) includes lithium (Li⁺), aluminum (aluminate ions) and silicon (silicate ions).

### 4) Fourth process: Evaporation and concentration process

The filtrate obtained through the primary solid-liquid separation is mostly a lithium hydroxide aqueous solution, and contains calcium, aluminum, silicon, and the like as impurities at 200 ppm or less. The purpose of the evaporation and concentration process of the present invention is to evaporate water in the lithium hydroxide aqueous solution, thereby increasing the lithium concentration, and to precipitate, thereby removing, impurities such as calcium, aluminum, or a silicon compound.

The evaporation and concentration process of the present invention is preferably performed by performing evaporation under reduced pressure at 70 °C to 95 °C, and if performed under atmospheric pressure, the evaporation and concentration process may be performed under atmospheric pressure conditions of 100 °C. However, if performed under atmospheric pressure, a nitrogen gas or an argon gas is required to be purged to prevent carbon dioxide from coming into contact with a concentration liquid.

It is preferable that the evaporation and concentration process of the present invention is performed until the lithium concentration in a solution reaches 0.5% to 5%. If the evaporation and concentration is completed before the lithium concentration reaches 0.5%, the impurities may not be removed, and if the evaporation concentration is performed to a lithium concentration of 5% or greater, the process efficiency decreases and the process costs increases.

### 5) Fifth process: Secondary solid-liquid separation process

Solid-liquid separation (secondary solid-liquid separation) is performed on the concentration liquid which has undergone the evaporation and concentration. Through the secondary solid-liquid separation, calcium hydroxide, calcium carbonate, aluminum hydroxide, silicon dioxide, calcium silicate hydrate, lithium carbonate, and the like, which are precipitates of the evaporation and concentration process, are obtained in a solid phase, and a lithium hydroxide aqueous solution is separated in a liquid phase. In general, the secondary solid-liquid separation process may be performed using a sedimentation tank, a filter press, a screw filter, a centrifuge, or the like, or a combination of two or more thereof to increase the efficiency. The solid phase obtained through the secondary solid-liquid separation contains lithium carbonate, and thus, is re-introduced to the waste sagger crushed material dissolution process to further recover lithium.

### 6) Sixth process: Carbonation reaction process

The filtrate obtained through the secondary solid-liquid separation process is the lithium hydroxide aqueous solution, so that a carbonation reaction is performed thereon to precipitate lithium carbonate (Li₂CO₃). To the carbonation reaction process, a first carbonation method (refer to Formula 1) performed by injecting a carbon dioxide (CO₂) gas into a lithium hydroxide aqueous solution, a second carbonation method (see Formula 2) performed by mixing a lithium hydroxide aqueous solution with carbonated water, a third carbonation method (see Formula 3) performed by mixing a lithium hydroxide aqueous solution with a lithium hydrogen carbonate aqueous solution, a fourth carbonation method (see Formula 4) performed by mixing a lithium hydroxide aqueous solution with a sodium carbonate aqueous solution, or a fifth carbonation method (see Formula 5) performed by mixing a lithium hydroxide aqueous solution with a potassium carbonate aqueous solution may be applied.

[Formula 1] 2LiOH + CO₂ → Li₂CO₃ + H₂O

[Formula 2] 2LiOH + H₂CO₃ → Li₂CO₃ + 2H₂O

[Formula 3] LiOH + LiHCO₃ → Li₂CO₃ + H₂O

[Formula 4] 2LiOH + Na₂CO₃ → Li₂CO₃ + 2NaOH

[Formula 5] 2LiOH + K₂CO₃ → Li₂CO₃ + 2KOH

Among the above-described carbonation methods, the fourth carbonation method and the fifth carbonation method have a risk of allowing impurities such as sodium and potassium to be mixed in, respectively, and thus, has a problem in that the impurities are required to be removed through an additional process. Therefore, in the present invention, the first carbonation method, the second carbonation method, or the third carbonation method, which do not have the risk of allowing impurities to be mixed in, are used, and preferably, the first carbonation method of injecting a carbon dioxide gas is used.

The first carbonation method of the present invention is preferably performed by blowing a carbon dioxide gas at a flow rate of 3.12 to 12.48 x 10 ³ℓ/min into a 2% LiOH solution in a reactor with a capacity of 10 m³, thereby completing a carbonation reaction in 30 minutes to 120 minutes. If the gas is injected in an amount greater than the above-described flow rate range, the amount of gas to be lost without participating in the carbonation reaction increases, and if the gas is injected in an amount less than the above-described flow rate range, the time required for the carbonation reaction increases, thereby degrading the production efficiency. The first carbonating method of the present invention is an exothermic reaction, and if the reaction starts at 20 °C, the temperature at the end of the reaction is about 30 °C. Therefore, there is no need for a separate heating operation during the reaction period, but as the temperature increases, the solubility of carbon dioxide decreases, which increases the amount of an unreacted carbon dioxide gas, so that there is a need to lower the gas injection flow rate. On the other hand, if the reaction temperature increases, the solubility of lithium carbonate decreases, which not only improves the yield of the lithium carbonate, but also accelerates the crystal growth rate, resulting in an effect of increasing the purity by recrystallization. Therefore, in the present invention, carbonation is performed (reactor of 20 °C with a capacity of 10 m³, 2% LiOH solution, carbon dioxide injection flow rate of 3.12 to 12.48 x 10 ³ℓ/min) using the first carbonation method at room temperature, and after the carbonation reaction is completed, a carbonation reaction liquid is heated to 100 °C.

The carbonation reaction liquid of the present invention is in a strongly alkaline state with a pH of 12 or higher at the beginning of the reaction, and as the reaction progresses, the pH gradually decreases and converges to a pH of 7. The production of lithium carbonate is completed around a pH of 9, and in a pH state lower than pH 9, the lithium carbonate is redissolved into lithium bicarbonate. Therefore, it is preferable that the carbonation reaction is completed when the pH is between 8 and 10. If the reaction is completed at a pH of greater than 10, silicon and aluminum, which are impurities, are present in an ionic state such as silicate ions or aluminate ions, and if the reaction is completed at a pH of less than 8, silicon and aluminum co-precipitate with lithium carbonate as SiO₂ or Al(OH)₃, so that there is a problem in that the purity of the lithium carbonate is degraded.

The second carbonation method of the present invention may use carbonated water prepared by injecting a carbon dioxide gas at a pressure of 5 bar to 20 bar at a temperature of 5 °C to 10 °C or lower, and preferably, uses carbonated water prepared by injecting a carbon dioxide gas at a pressure of 10 bar and at a temperature of 5 °C or lower. The carbonated water prepared by injecting a carbon dioxide gas at a pressure of 10 bar and at a temperature of 5°C or lower contains about 0.68 mol of carbon dioxide. According to the embodiment of the present invention, if 1 ℓ of the carbonated water and 500 mℓ of a 2.72 mol lithium hydroxide aqueous solution are mixed, reacted at 20 °C for 30 minutes, heated to 100 °C, aged for 10 minutes, and then filtered, it is possible to obtain about 39 g of high-purity lithium carbonate. In the second carbonation method, it is preferable that the pH of a reaction liquid is maintained at 8 or higher when the reaction is completed, and LiOH is added at a concentration of 1.01 times to 1.1 times the theoretical equivalent to prevent silicon and aluminum from being mixed in.

The third carbonation method of the present invention is a method of using a lithium hydrogen carbonate (LiHCO₃) aqueous solution, and a lithium hydrogen carbonate aqueous solution prepared by reacting lithium carbonate and carbonated water, or a lithium hydrogen carbonate aqueous solution prepared by reacting lithium carbonate and carbon dioxide in a pressure vessel may be used. It is preferable that the lithium hydrogen carbonate aqueous solution prepared by reacting lithium carbonate and carbon dioxide in a pressure vessel is used as the lithium hydrogen carbonate aqueous solution, and the reason is that if the lithium carbonate and the carbon dioxide are reacted in the pressure vessel, the concentration of lithium bicarbonate in the aqueous solution may be rapidly increased. In a method for reacting the lithium carbonate with the carbon dioxide, it is preferable that the carbon dioxide pressure is maintained at 2 bar to 20 bar in a pressure reaction vessel of 20 °C or lower, and in the above reaction, it is also preferable that LiOH is reacted at a concentration of 1.01 times to 1.1 times the theoretical equivalent to prevent silicon and aluminum from being mixed in.

### 7) Seventh process: Tertiary solid-liquid separation process

Tertiary solid-liquid separation process is performed on the reaction liquid which has undergone the above-described carbonation reaction process. Through the tertiary solid-liquid separation, a first lithium carbonate is obtained in a solid phase, and an aqueous solution containing unreacted lithium hydroxide and impurity ions is obtained in a liquid phase (filtrate). The first lithium carbonate is introduced to a carbonic acid dissolution process to improve the purity, and the filtrate is re-introduced to the waste sagger crushed material dissolution process to further recover lithium of the unreacted lithium hydroxide and remove the impurities. The filtrate may be introduced to the waste sagger crushed material together with an additive (calcium hydroxide, calcium oxide, or magnesium hydroxide) to promote lithium extraction.

### 8) Eighth process: Pressurized carbonic acid dissolution process

Since the pressurized carbonic acid dissolution process is performed by adding water to the first lithium carbonate of a solid phase obtained through the tertiary solid-liquid separation process, and then injecting a carbon dioxide gas (CO₂) thereto, a re-dissolution process of lithium carbonate is performed to improve the purity. If lithium carbonate and a carbon dioxide gas come into contact, the pH of a reaction liquid converges to 6 to 8 over time, and the lithium carbonate becomes lithium bicarbonate and is dissolved. At this time, an aluminum component (Al(OH)₃), a silicon component (SiO₂), and calcium carbonate (CaCO₃), which are not dissolved, may be removed in a solid phase through a quaternary solid-liquid separation process. For the pressurized carbonic acid dissolution process, the slurry concentration may be controlled such that lithium carbonate is in an amount of 2 parts by weight to 12 parts by weight based on 100 weight parts of water. If the lithium carbonate of the slurry is less than 2 parts by weight, the process efficiency decreases, and if the lithium carbonate of the slurry is greater than 12 parts by weight, the time required to completely dissolve the lithium carbonate increases, and the lithium carbonate which has not completely dissolved is removed together with impurities, thereby causing a problem of decreasing the yield. The solubility of lithium carbonate with respect to carbonated water increases as the temperature decreases. It is preferable that the pressurized carbonic acid dissolution process of the present invention is performed at 0 °C to 20 °C.

### 9) Ninth process: Quaternary solid-liquid separation process

Through the pressurized carbonic acid dissolution process, a lithium bicarbonate aqueous solution is obtained in a liquid phase, and impurities such as an aluminum component (Al(OH)₃), a silicon component (SiO₂), and a calcium component (CaCO₃) are separated in a solid phase. Lithium bicarbonate of the lithium bicarbonate aqueous solution obtained through the quaternary solid-liquid separation process is converted into lithium carbonate through recrystallization.

### 10) Tenth process: Heating recrystallization process

The filtrate (lithium bicarbonate aqueous solution) obtained from the quaternary solid-liquid separation process is heated to precipitate the lithium bicarbonate as lithium carbonate (second lithium carbonate). The above-described precipitation process is represented by Formula 6.

[Formula 6] 2LiHCO₃ ⇄ Li₂CO₃ + CO₂ + H₂O

If the reaction temperature is low and the pressure is increased, a lithium carbonate dissolution reaction proceeds to produce lithium bicarbonate, and if the reaction temperature is high and the pressure is decreased, lithium bicarbonate is precipitated as lithium carbonate. The above-described lithium bicarbonate decomposition process has a disadvantage in that lithium carbonate is precipitated with only simple intense stirring or aeration, but the speed of the precipitation is very slow. Therefore, the most economical and easiest way to precipitate lithium bicarbonate as lithium carbonate in the above-described reaction is to heat a reaction liquid to 80 °C to 100°C while stirring the same. The precipitation reaction rate of lithium carbonate varies depending on temperature and pressure, and the higher the temperature and the lower the pressure, the higher the rate. According to the embodiment, if an aqueous solution having a concentration of 2 mol/ℓ of LiHCO₃ is heated to 100 °C, the precipitation reaction of lithium carbonate is completed within 20 minutes. The aqueous solution obtained in a liquid phase (filtrate) from the reaction liquid of the heating recrystallization process is reused as water of the waste sagger crushed material dissolution process.

### 11) Eleventh process: Quinary solid-liquid separation process, and drying process

If the reaction liquid of the heating recrystallization process is subjected to solid-liquid separation, precipitated lithium carbonate is obtained as a solid phase, and the precipitated lithium carbonate is dried to obtain high-purity lithium carbonate (purity of 99.9% or greater).

### 12) Twelfth process: Primary wet magnetic separation process

Wet magnetic separation (primary wet magnetic separation) is performed on the solid phase obtained through the primary solid-liquid separation. It is preferable that the primary wet magnetic separation process is performed after preparing a slurry by adding water to the solid phase, and it is sufficient for the water to have quality similar to that of industrial water, and it is also possible to reuse the water used in the process. The primary wet magnetic separation is to remove iron pieces or iron scales mixed in by wear during the crushing of the waste sagger. The iron pieces or the iron scales have very strong magnetization ability, so that it is possible to remove the iron pieces or the iron scales as magnetic complexes at a magnetic flux density of about 100 gauss to 500 gauss. At 200 gauss or less, the iron pieces and the iron scales are mostly removed as magnetic complexes, but at greater than 200 gauss, the mixing-in rate of a positive electrode active material increases together with the iron pieces and the iron scales as magnetic complexes. Therefore, if the wet magnetic separation is performed at greater than 200 gauss, separate magnetic force may be required for the mixed-in positive electrode active material. Magnetic complexes separated through the primary wet magnetic separation process are iron pieces (iron oxide) and iron scales, and non-magnetic complexes are a positive electrode active material, alumina, and silicate.

### 13) Thirteenth process: Secondary wet magnetic separation process

The secondary wet magnetic separation process of the present invention is to recover a positive electrode active material containing nickel oxide, cobalt oxide, and the like from non-magnetic complexes of the primary wet magnetic separation process. Since the positive electrode active material included in the non-magnetic complexes corresponds to a weak magnetic or paramagnetic body, a magnet having a high magnetic flux density is required to recover the positive active material as a magnetic complex.

The secondary wet magnetic separation process of the present invention may use a high-gradient magnetic separator having a magnetic flux density of 10,000 gauss or greater, and may preferably use a high-gradient magnetic separator having a magnetic flux density of 30,000 gauss or greater. In addition, the high-gradient magnetic separator may preferably have a structure in which a slurry containing particles to be separated flows between magnetized magnetic media. The solid concentration of the slurry may be 1% to 10%. If the solid concentration is less than 1%, there is a problem in that the number of unnecessary storage tanks increases and the energy cost increases due to an increase in water capacity, and if the solid concentration is greater than 10%, the separation efficiency is significantly degraded. Through the secondary wet magnetic separation process, the positive electrode active material is separated as a magnetic complex, and alumina or silicate as a composition of the wet sagger from which lithium has been removed is separated as a non-magnetic complex.

### 14) Fourteenth process: Alkali lithium leaching process

A poorly soluble lithium compound remains in the non-magnetic complex of the secondary wet magnetic separation, and the concentration of residual lithium is 1,000 mg/kg to 6,000 mg/kg. In order to recover the residual lithium, a hydroxide or oxide of an alkali earth metal represented by calcium hydroxide and the non-magnetic complex are mixed together with water, and the mixture is reacted at 100 °C to 200 °C for 1 hour or longer in a pressure reaction vessel, and then 70% or greater of the remaining poorly soluble lithium compound decomposes and lithium is leached. In this case, the longer the reaction time and the higher the reaction temperature, the higher the leaching rate of lithium, but the process costs increase, so that it is preferable that the reaction temperature and the reaction time are determined in consideration of an economic benefit according to an increase in lithium recovery rate. It is preferable that the solid concentration of a reaction slurry is adjusted to 10 wt% to 50 wt%.

### 15) Fifteenth process: Senary solid-liquid separation process

When calcium hydroxide or calcium oxide is used as an alkali leaching agent, leached residues are mostly calcium silicate hydrate, magnesium aluminate, calcium aluminum hydrate, and small amounts of calcium aluminum silicate, and aluminum hydroxide, silicon dioxide, and calcium hydroxide are also present. A liquid phase has the highest concentration of Li⁺ and OH⁻, and contains small amounts of Ca²⁺, AlO₂⁻, H₂SiO₄²⁻, and the like. The leached residues obtained by the solid-liquid separation are washed and then discharged, and the liquid phase is sent to the evaporation and concentration process to be used as a raw material for the production of lithium carbonate.

The specific embodiments described in this specification are representative of preferred embodiments or examples of the present invention, and the scope of the present invention is not limited thereby. It will be apparent to those skilled in the art that modifications and other uses of the present invention do not depart from the scope of the invention described in the claims of this specification.

### INDUSTRIAL APPLICABILITY

When the method for producing high-purity lithium carbonate from a waste sagger of the present invention is used, it is expected not only to be able to produce high-purity lithium carbonate that can be used for manufacturing lithium secondary batteries by recycling a discarded waste sagger, but also to be able to recycle a positive electrode active material, iron oxide, alumina, silicate, calcium carbonate, and the like obtained as by-products during the production process of the lithium carbonate.

## Claims

1. A method for producing high-purity lithium carbonate from a waste sagger, the method comprising:
a first step of crushing a waste sagger to produce a waste sagger crushed material;
a second step of adding an alkali leaching agent and water to the waste sagger crushed material and then allowing a reaction to occur therebetween to prepare a waste sagger crushed material dissolution reaction slurry;
a third step of performing primary solid-liquid separation on the waste sagger crushed material dissolution reaction slurry;
a fourth step of evaporating and concentrating a filtrate obtained in a liquid phase through the primary solid-liquid separation;
a fifth step of performing secondary solid-liquid separation on a contraction liquid obtained through the evaporation and concentration;
a sixth step of performing a carbonation reaction on a filtrate obtained in a liquid phase through the secondary solid-liquid separation to prepare a carbonation reaction liquid;
a seventh step of performing tertiary solid-liquid separation on the carbonation reaction liquid;
an eighth step of adding water to a first lithium carbonate obtained in a solid phase through the tertiary solid-liquid separation to prepare a first lithium carbonate suspension, and then injecting carbon dioxide (CO₂) thereto to dissolve the first lithium carbonate;
a ninth step of performing quaternary solid-liquid separation on an aqueous solution in which the first lithium carbonate is dissolved;
a tenth step of heating, thereby recrystallizing, a filtrate obtained in a liquid phase through the quaternary solid-liquid separation to precipitate a second lithium carbonate; and
an eleventh step of performing quinary solid-liquid separation on the filtrate from which the second lithium carbonate has been precipitated to obtain high-purity second lithium carbonate in a solid phase, and drying the second lithium carbonate.

2. The method of claim 1, wherein the waste sagger crushed material dissolution reaction slurry is prepared by adding one or more alkalis among a hydroxide of an alkali metal, a carbonate of an alkali metal, or a hydroxide of an alkali earth metal together with water to the waste sagger crushed material, and heating the mixture.

3. The method of claim 1, wherein the evaporation and concentration is performed by performing evaporation under reduced pressure at 70 °C to 95 °C or performing heating to 100 °C in an atmosphere in which carbon dioxide and a concentration liquid do not come into contact by purging a nitrogen gas or an argon gas under atmospheric pressure.

4. The method of claim 1, wherein the evaporation and concentration is performed until the concentration of lithium in the concentration liquid reaches 0.5% to 5%.

5. The method of claim 1, wherein the carbonation reaction is performed by injecting one or two or more selected from among carbon dioxide, carbonated water, and a lithium hydrogen carbonate aqueous solution to a filtrate obtained in a liquid phase through the secondary solid-liquid separation to allow a reaction to occur therebetween until the pH reaches 8 to 10.

6. The method of claim 1, wherein a filtrate obtained in a liquid phase through the tertiary solid-liquid separation is added to the waste sagger crushed material dissolution reaction slurry to further recover unreacted lithium hydroxide which has not participated in the carbonization reaction.

7. The method of claim 1, wherein a reaction of dissolving the first lithium carbonate by injecting carbon dioxide to the first lithium carbonate suspension is performed at a temperature of 0 °C to 20 °C, and allows the pH of a reaction liquid to be 6 to 8 at the end of the reaction.

8. The method of claim 1, wherein a filtrate obtained in a liquid phase through the quaternary solid-liquid separation is heated to a temperature of 80 °C to 100 °C.

9. The method of claim 1, wherein the second lithium carbonate has a purity of 99.9% or greater.

10. A method for producing high-purity lithium carbonate from a waste sagger, the method comprising:
a twelfth step of crushing a waste sagger to produce a waste sagger crushed material;
a thirteenth step of adding an alkali leaching agent and water to the waste sagger crushed material and then allowing a reaction to occur therebetween to prepare a waste sagger crushed material dissolution reaction slurry;
a fourteenth step of performing primary solid-liquid separation on the waste sagger crushed material dissolution reaction slurry;
a fifteenth step of preparing a solid phase obtained through the primary solid-liquid separation as a suspension, and then performing primary wet magnetic separation to obtain a first magnetic complex and a first non-magnetic complex;
a sixteenth step of preparing the first non-magnetic complex as a suspension, and then performing secondary wet magnetic separation to obtain a second magnetic complex and a second non-magnetic complex;
a seventeenth step of introducing water and a leaching agent to the second non-magnetic complex, and then allowing a reaction to occur therebetween to prepare a lithium leaching reaction liquid;
an eighteenth step of performing senary solid-liquid separation on the lithium leaching reaction liquid;
a nineteenth step of evaporating and concentrating a filtrate obtained in a liquid phase through the senary solid-liquid separation;
a twentieth step of performing secondary solid-liquid separation on a concentration liquid obtained through the evaporation and concentration;
a twenty-first step of performing a carbonation reaction on a filtrate obtained in a liquid phase through the secondary solid-liquid separation to prepare a carbonation reaction liquid;
a twenty-second step of performing tertiary solid-liquid separation on the carbonation reaction liquid;
a twenty-third step of adding water to a first lithium carbonate obtained in a solid phase through the tertiary solid-liquid separation to prepare a first lithium carbonate suspension, and then injecting a carbon dioxide (CO₂) gas thereto to dissolve the first lithium carbonate;
a twenty-fourth step of performing quaternary solid-liquid separation on an aqueous solution in which the first lithium carbonate is dissolved;
a twenty-fifth step of heating, thereby recrystallizing, a filtrate obtained in a liquid phase through the quaternary solid-liquid separation to precipitate a second lithium carbonate; and
a twenty-sixth step of performing quinary solid-liquid separation on the filtrate from which the second lithium carbonate has been precipitated to obtain high-purity second lithium carbonate in a solid phase, and drying the second lithium carbonate.

11. The method of claim 10, wherein the waste sagger crushed material dissolution reaction slurry is prepared by adding one or more alkalis among a hydroxide of an alkali metal, a carbonate of an alkali metal, or a hydroxide of an alkali earth metal together with water to the waste sagger crushed material, and heating the mixture.

12. The method of claim 10, wherein: the first magnetic complex is a magnetic complex containing iron oxide and iron scale; the second magnetic complex is a magnetic complex containing a positive electrode active material; and the solid phase of the senary solid-liquid separation contains alumina and silicate.

13. The method of claim 10, wherein the lithium leaching reaction liquid is prepared by adding a hydroxide or oxide of an alkali earth metal, as a leaching agent, and water to the second non-magnetic complex and then allowing a reaction to occur therebetween in a pressure reaction vessel at a temperature of 100 °C to 200 °C within 3 hours of reaction time, and the lithium leaching reaction liquid has a reaction slurry concentration of 10 wt% to 50 wt%.

14. The method of claim 10, wherein the evaporation and concentration is performed by performing evaporation under reduced pressure at 70 °C to 95 °C or performing heating to 100 °C in an atmosphere in which carbon dioxide and a concentration liquid do not come into contact by purging a nitrogen gas or an argon gas under atmospheric pressure.

15. The method of claim 10, wherein the evaporation and concentration is performed until the concentration of lithium in the concentration liquid reaches 0.5% to 5%.

16. The method of claim 10, wherein the carbonation reaction is performed by injecting one or two or more selected from among carbon dioxide, carbonated water, and a lithium hydrogen carbonate aqueous solution to a filtrate obtained in a liquid phase through the secondary solid-liquid separation to allow a reaction to occur therebetween until the pH reaches 8 to 10.

17. The method of claim 10, wherein a filtrate obtained in a liquid phase through the tertiary solid-liquid separation is added to the waste sagger crushed material dissolution reaction slurry to further recover unreacted lithium hydroxide which has not participated in the carbonization reaction.

18. The method of claim 10, wherein a reaction of dissolving the first lithium carbonate by injecting carbon dioxide to the first lithium carbonate suspension is performed at a temperature of 0 °C to 20 °C, and allows the pH of a reaction liquid to be 6 to 8 at the end of the reaction.

19. The method of claim 10, wherein a filtrate obtained in a liquid phase through the quaternary solid-liquid separation is heated to a temperature of 80 °C to 100 °C.

20. The method of claim 10, wherein the second lithium carbonate has a purity of 99.9% or greater.
